# EUROPEAN PATENT APPLICATION

(11) **EP 4 726 449 A1**
(43) Date of publication of application: **15.04.2026**
(21) Application number: 24819164.5
(22) Date of filing: 22.05.2024
(51) Int. Cl.: G02B 6/40, G02B 6/38

(54) **OPTICAL FIBER HOLDING COMPONENT, OPTICAL FIBER ASSEMBLY, OPTICAL CONNECTOR, AND OPTICAL COUPLING DEVICE**

(30) Priority: 06.06.2023 JP 2023093169
(71) Applicant: Sumitomo Electric Industries, Ltd., Osaka-shi, Osaka 541-0041 (JP)
(72) Inventor: MORISHIMA Tetsu, Osaka-shi, Osaka 541-0041 (JP)
(74) Representative: TBK
(86) International application number: PCT/JP2024/018860
(87) International publication number: WO 2024/252931

(57) **Abstract**

The optical fiber holding component that is fixed relative to the ferrule includes a first end surface and a second end surface, a plurality of through holes, a first flat surface, and a pair of projected corners. The first flat surface has a width equal to or less than a width of the ferrule flat surface, and a maximum width of the optical fiber holding component is larger than the width of the ferrule flat surface.

## Description

### TECHNICAL FIELD

The present disclosure relates to an optical fiber holding component, an optical fiber assembly, an optical connector, and an optical coupling device. This application claims priority from Japanese Patent Application No. 2023/093169 filed on June 6, 2023, the content of which is relied upon and incorporated herein by reference in its entirety.

### BACKGROUND ART

Patent Literature 1 discloses an MT connector for optically connecting a plurality of optical fibers and a plurality of other optical fibers altogether. In addition, a plurality of multi-core optical fibers (hereinafter, referred to as "MCF") each including a plurality of cores are applied as optical fibers to the MT connector of Patent Literature 1. Thus, the plurality of MCFs aligned by being rotated about a fiber axis are temporarily held by a plurality of fiber holding components for maintaining the alignment state for each one or two MCFs. By inserting the plurality of optical fiber holding components into a ferrule, an MT connector in which the alignment state of the plurality of MCFs is maintained is obtained.

### CITATION LIST

### PATENT LITERATURE

Patent Literature 1: WO 2016/031678

### SUMMARY OF INVENTION

An optical fiber holding component of the present disclosure is configured to hold a plurality of optical fibers and to be fixed to a ferrule in a state in which at least a portion of the optical fiber holding component is inserted into an accommodation space. The ferrule has a front end surface provided with a plurality of fiber holes into each of which a tip portion of a corresponding one of the plurality of optical fibers is inserted, a rear end surface provided with an opening portion defined by an opening end in which a plurality of recessed corners are each chamfered, and the accommodation space extending from the rear end surface toward the front end surface and having a cross-sectional shape coinciding with a shape of the opening portion. The optical fiber holding component includes a first end surface, a second end surface, a plurality of through holes, a first flat surface, and a pair of projected corners. The first end surface and the second end surface are arranged along a first direction from the front end surface toward the rear end surface of the ferrule. The plurality of through holes have a shape extending along the first direction from the first end surface, the plurality of through holes being arranged along a second direction orthogonal to the first direction and being configured such that a corresponding optical fiber among the plurality of optical fibers extends through each of the plurality of through holes from the second end surface toward the first end surface. The first flat surface directly faces a ferrule flat surface. The ferrule flat surface is an installation reference surface that is a portion of an inner wall surface defining the accommodation space of the ferrule, the ferrule flat surface being sandwiched by, among the plurality of recessed corners, a pair of recessed corners adjacent to each other. The pair of projected corners are arranged so as to sandwich the first flat surface in the second direction. The pair of projected corners are chamfered such that a state of the pair of projected corners being not in contact with the pair of recessed corners is maintained in a state in which the ferrule flat surface and the first flat surface are in contact with each other. In the optical fiber holding component of the present disclosure, with respect to a width of the ferrule in the second direction, a width of the optical fiber holding component in the second direction satisfies a relationship in which a width of the first flat surface is set to be smaller than or equal to a width of the ferrule flat surface and in which a maximum width of the optical fiber holding component is longer than a width of the ferrule flat surface.

### BRIEF DESCRIPTION OF THE DRAWINGS

[FIG. 1] FIG. 1 is a diagram illustrating an example of an assembly process of an optical coupling device of the present disclosure.
[FIG. 2] FIG. 2 is a diagram illustrating an example of the structure of a ferrule applicable to an optical connector of the present disclosure.
[FIG. 3] FIG. 3 is a diagram illustrating an example of the structure of an optical fiber assembly of the present disclosure and an optical fiber holding component of the present disclosure.
[FIG. 4] FIG. 4 is a diagram for explaining an insertion state of the optical fiber holding component of the present disclosure;
[FIG. 5] FIG. 5 is a diagram for explaining a change in the shape of the optical fiber after the optical fiber assembly is inserted into a ferrule.
[FIG. 6] FIG. 6 is a diagram illustrating the structure of a modification of the optical fiber holding component of the present disclosure.

### DETAILED DESCRIPTION

### [Problems to be Solved by Present Disclosure]

The inventor has found the following problems as a result of examining the above-described conventional technique. That is, in the assembly process of the MT connector of Patent Literature 1, a plurality of optical fiber holding components that hold the MCFs aligned for each one or two MCFs are prepared. The plurality of optical fiber holding components are inserted into the ferrule one by one. In this case, since it is necessary to bond each inserted optical fiber holding component to the ferrule, there is a problem that it takes time to mount the plurality of optical fiber holding components on the ferrule.

In addition, the MT connector of Patent Literature 1 has a problem that a positioning mechanism of the ferrule and the optical fiber holding component is complicated. This is because, due to the structural nature of the MCF, all the optical fiber holding components need to be individually arranged with high accuracy in the rotational direction in addition to the horizontal direction and the vertical direction.

Further, when the plurality of optical fiber holding components are adhesively fixed to the ferrule, a clearance for injecting an adhesive is required between the ferrule and the plurality of optical fiber holding components. On the other hand, the clearance causes instability of the orientation of the plurality of optical fiber holding components in the ferrule at the time of fixing. In particular, when the posture of each of the plurality of optical fiber holding components in the ferrule at the time of fixing is not stable, there is a possibility that the orientation of each optical fiber holding component may be deviated with respect to the fiber hole of the ferrule in which the tip portion of the MCF is held. In such a situation, even when the plurality of MCFs are inserted into the fiber hole of the ferrule, unnecessary stress is applied to a portion of the held MCF exposed from each optical fiber holding component, which may cause damage to the MCF.

The present disclosure has been made to solve the above-described problems, and an object thereof is to provide an optical fiber holding component, an optical fiber assembly, an optical connector, and an optical coupling device that are easily fixed to a ferrule and have a structure for restricting an orientation change before being fixed to the ferrule.

### [Advantageous Effects of Present Disclosure]

The optical fiber holding component of the present disclosure can be easily fixed to the ferrule and can restrict an orientation change before being fixed to the ferrule.

### [Description of Embodiments of Present Disclosure]

The contents of the embodiments of the present disclosure are individually listed and described.
(1) An optical fiber holding component of the present disclosure is a component configured to hold a plurality of optical fibers and to be fixed to a ferrule in a state in which at least a portion of the optical fiber holding component is inserted into an accommodation space. For example, in a case where each optical fiber is an MCF having a plurality of cores, the optical fiber holding component also functions as a component that maintains the alignment state of each MCF.

The ferrule in which at least a portion of the optical fiber holding component is inserted into the accommodation space has a front end surface provided with a plurality of fiber holes into each of which a tip portion of a corresponding one of the plurality of optical fibers is inserted, a rear end surface provided with an opening portion defined by an opening end in which a plurality of recessed corners are each chamfered, and the accommodation space extending from the rear end surface toward the front end surface and having a cross-sectional shape coinciding with a shape of the opening portion.

Meanwhile, the optical fiber holding component is a component fixed to the ferrule in a state of holding the plurality of optical fibers, and a portion thereof is inserted into the accommodation space from the opening portion. The optical fiber holding component includes a first end surface, a second end surface, a plurality of through holes, a first flat surface, and a pair of projected corners. The first end surface and the second end surface are arranged along a first direction from the front end surface toward the rear end surface of the ferrule. The plurality of through holes have a shape extending along the first direction from the first end surface, the plurality of through holes being arranged along a second direction orthogonal to the first direction and being configured such that a corresponding optical fiber among the plurality of optical fibers extends through each of the plurality of through holes from the second end surface toward the first end surface. A first flat surface directly faces a ferrule flat surface. The ferrule flat surface is an installation reference surface that is a portion of an inner wall surface defining the accommodation space of the ferrule, the ferrule flat surface being sandwiched by, among the plurality of recessed corners, a pair of recessed corners adjacent to each other. The pair of projected corners are arranged so as to sandwich the first flat surface in the second direction. The pair of projected corners are chamfered such that a state of the pair of projected corners being not in contact with the pair of recessed corners is maintained in a state in which the ferrule flat surface and the first flat surface are in contact with each other.

In the optical fiber holding component of the present disclosure, with respect to a width of the ferrule in the second direction, a width of the optical fiber holding component in the second direction satisfies a relationship in which a width of the first flat surface is set to be smaller than or equal to a width of the ferrule flat surface and in which a maximum width of the optical fiber holding component is longer than a width of the ferrule flat surface.

In addition, as in the above-described "ferrule flat surface" and "first flat surface", the "flat surface" disclosed in the present specification means a surface having a curvature of 0.1 (1/mm) or less. The "recessed corner" and the "projected corner" mean a portion sandwiched by a pair of adjacent "flat surfaces", and the pair of "flat surfaces" are adjacent to the "recessed corner" or the "projected corner" and are continuous with each other. Further, "chamfering" of the recessed corner of the opening end in the rear end surface of the ferrule and "chamfering" of the projected corner of the optical fiber holding component include "C-chamfering" for processing the edge portion into a surface inclined at 45° with respect to the flat surface and "R-chamfering" for processing the surface of the edge portion to be smooth.

As described above, the rear end surface of the ferrule, which is fixed in a state in which the optical fiber holding component is inserted, is provided with the opening portion defined by the opening end chamfered with the plurality of recessed corners. On the other hand, the projected corner of the optical fiber holding component is chamfered so as not to be contact with the recessed corner. In addition, the width of the first flat surface of the optical fiber holding component is set to be equal to or less than the width of the ferrule flat surface serving as the installation reference surface. On the other hand, the maximum width of the optical fiber holding component is set to be longer than the width of the ferrule flat surface. With this configuration, the optical fiber holding component can be inserted into and fixed to the ferrule with high accuracy, and the orientation change of the optical fiber holding component before being fixed in the ferrule can be effectively restricted. Further, since the optical fiber holding component holds the plurality of optical fibers, these optical fibers can be collectively mounted on the ferrule.

(2) In the above (1), a width of the first flat surface sandwiched between the pair of projected corners may be equal to a width of the ferrule flat surface. The recessed corner of the opening end in the rear end surface of the ferrule is chamfered, and the projected corner of the optical fiber holding component is also chamfered. Thus, when the width of the first flat surface is equal to the width of the ferrule flat surface, the movement of the optical fiber holding component along the second direction is automatically restricted. In other words, once the first flat surface and the ferrule flat surface are in contact with each other, the orientation of the optical fiber holding component before being fixed in the ferrule is stabilized.

(3) In the above (1) or (2), the plurality of through holes arranged on the first end surface may include a plurality of row formation groups each defined by one or more through holes arranged along the second direction, and the plurality of row formation groups may be arranged along a third direction orthogonal to both the first direction and the second direction. As described above, the plurality of through holes are two dimensionally arranged on the first end surface, so that the optical fiber holding component can hold more optical fibers. In addition, when the plurality of optical fibers are arranged not only in the second direction but also in the third direction, the number of optical fibers held by the optical fiber holding component may be increased significantly, and as a result, the workability of mounting the ferrule on the plurality of optical fibers may be improved significantly.

(4) In any one of the above (1) to (3), the first flat surface may be a surface parallel to both the first direction and the second direction. The first flat surface may be a surface parallel to both the first direction and a third direction. The third direction is a direction orthogonal to each of the first direction and the second direction. When the first flat surface is a surface parallel to both the first direction and the second direction, a large surface parallel to a plurality of optical fibers can be used due to the structure of the optical fiber holding component and the ferrule. Thus, the orientation of the optical fiber holding component in the ferrule can be further stabilized. On the other hand, when the first flat surface is a surface parallel to both the first direction and the third direction, the optical fiber holding component is easily positioned in the second direction, which is the arrangement direction of the fiber holes of the ferrule, in addition to the orientation stability of the optical fiber holding component in the ferrule.

(5) In any one of the above (1) to (4), the optical fiber holding component may have a second flat surface parallel to the first flat surface. By providing the first flat surface and the second flat surface parallel to each other, handling of the optical fiber holding component is facilitated, and as a result, workability of mounting the ferrule on the plurality of optical fibers can be improved.

(6) In any one of the above (1) to (5), the optical fiber holding component may have a third flat surface formed to be continuous from one of the pair of projected corners to the first flat surface. In this case, the first flat surface and the third flat surface may be orthogonal to each other. By making the first flat surface and the third flat surface orthogonal to each other, the optical fiber holding component can be positioned in both the second direction, which is the arrangement direction of the fiber holes of the ferrule, and the third direction orthogonal thereto. As a result, it is easy to mount the ferrule on the plurality of optical fibers.

(7) In any one of the above (1) to (6), the first end surface may have a quadrangular shape. When the entire optical fiber holding component is inserted into the accommodation space of the ferrule, both the first end surface and the second end surface are located in the accommodation space. Meanwhile, when a portion of the optical fiber holding component is inserted into the accommodation space of the ferrule, only the first end surface is located in the accommodation space. In either case, the handling of the optical fiber holding component is facilitated, and the optical fiber holding component can be positioned with high accuracy in the ferrule.

(8) An optical fiber assembly of the present disclosure includes the optical fiber holding component having the structure described in any one of the above (1) to (7), and the plurality of optical fibers. The plurality of optical fibers are each fixed to a corresponding one of the plurality of through holes of the optical fiber holding component. A resin covering that covers a glass portion is removed from a tip portion of each of the plurality of optical fibers inserted into the plurality of fiber holes arranged on the front end surface of the ferrule. Thus, the portion of the optical fiber held in each of the plurality of through holes of the optical fiber holding component may be a portion from which the resin covering is removed or may be a portion covered with the resin covering. As described above, when the optical fiber holding component of the present disclosure disclosed in any one of the above (1) to (7) is applied, an optical fiber assembly that is easy to handle is obtained.

(9) An optical connector of the present disclosure includes the optical fiber assembly according to (8) and the ferrule. As described above, at least a portion of the optical fiber assembly is inserted into the accommodation space in the ferrule. In this configuration, an orientation of the optical fiber holding component in the accommodation space of the ferrule is maintained in a state in which a portion of the optical fiber holding component is in contact with the ferrule flat surface of the ferrule. The tip portions of the plurality of optical fibers are each inserted into a corresponding one of the plurality of fiber holes of the ferrule in a state in which the tip portions are fixed to the plurality of through holes of the optical fiber holding component. In this case, the optical connector in which high rotational alignment accuracy is maintained for each of the plurality of optical fibers is obtained.

(10) In the above (9), a clearance is maintained between the inner wall surface of the ferrule and the optical fiber holding component, the clearance being configured to restrict an orientation change of the optical fiber holding component, the orientation change being caused by a positional shift in the second direction, such that an angle formed by the ferrule flat surface and the first flat surface is 0° to 1° in a state in which a portion of the optical fiber holding component is in contact with the ferrule flat surface. This configuration restricts the movement of the optical fiber holding component along the ferrule flat surface.

(11) An optical coupling device of the present disclosure includes a first optical connector and a second optical connector each being the optical connector described in the above (9) or (10). A relative position between the first optical connector and the second optical connector is fixed in a state in which a front end surface of the first optical connector and a front end surface of the second optical connector face each other. In this case, the optical coupling device is obtained which enables optical coupling with low connection loss.

Each of the aspects listed in the Description of Embodiments of Present Disclosure is applicable to each of the other aspects or to a combination of the other aspects.

### [Details of Embodiments of Present Disclosure]

Specific examples of an optical fiber holding component, an optical fiber assembly, an optical connector, and an optical coupling device according to the present disclosure will be described in detail below with reference to the accompanying drawings. The present disclosure is not limited to these examples, but is defined by the scope of the claims, and is intended to include all modifications within the meaning and scope equivalent to the scope of the claims. In the description of the drawings, the same elements are denoted by the same reference signs, and redundant description will be omitted.

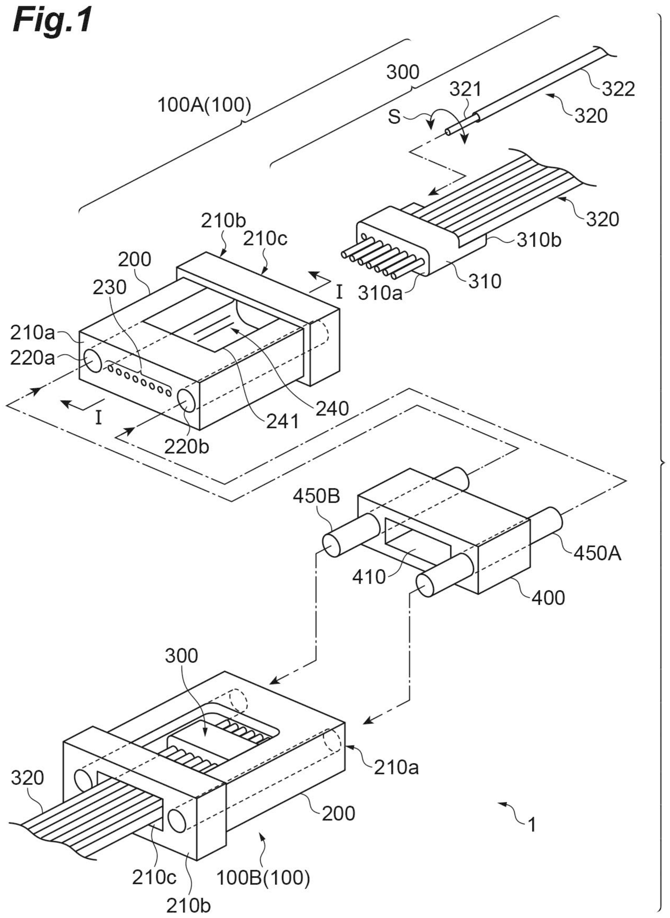

FIG. 1 is a diagram illustrating an example of an assembly process of an optical coupling device of the present disclosure. An optical coupling device 1 illustrated in FIG. 1 includes a pair of optical connectors 100 optically connected by a connection component 400, and the connection component 400. In FIG. 1, optical connectors 100A and 100B having the same structure are illustrated as the pair of optical connectors 100 to be optically coupled. The connection component 400 includes a through hole 410 for directly facing the optical connector 100A and the optical connector 100B, and guiding pins 450A and 450B for fixing relative positions of the optical connector 100A and the optical connector 100B.

The optical connector 100A includes a ferrule 200 and an optical fiber assembly 300. The ferrule 200 includes a front end surface 210a provided with a plurality of fiber holes 230, a rear end surface 210b provided with an opening portion 210c, and an accommodation space 240 provided between the front end surface 210a and the rear end surface 210b. The accommodation space 240 is connected to the outside of the ferrule 200 through the opening portion 210c of the rear end surface 210b and an injection hole 241 for injecting an adhesive provided on the upper end surface of the optical connector 100A. The optical connector 100A is also provided with guiding holes 220a and 220b into which the guiding pins 450A and 450B held by the connection component 400 are respectively inserted.

The optical fiber assembly 300 includes a plurality of optical fibers 320 and an optical fiber holding component 310 configured to hold the plurality of optical fibers 320. The plurality of optical fibers 320 include a glass optical fiber 321 and a resin covering 322 covering an outer circumference of the glass optical fiber 321. The optical fiber holding component 310 includes a first end surface 310a and a second end surface 310b arranged along a first direction from the front end surface 210a of the ferrule 200 to the rear end surface 210b. The optical fiber holding component 310 holds the plurality of optical fibers 320 in a state in which the tip portions of the plurality of optical fibers 320, from which the resin covering 322 is partially removed, are exposed from the first end surface 310a. Further, the optical fiber holding component 310 is inserted into the accommodation space 240 of the ferrule 200 through the opening portion 210c from the first end surface 310a, and then is adhered and fixed to the ferrule 200 in a state in which the orientation in the accommodation space 240 is maintained.

The optical connector 100B also has the same structure as the optical connector 100A described above. The connection component 400 is fixed to the front end surface 210a of the optical connector 100A by inserting the first ends of the guiding pins 450A and 450B of the connection component 400 into the guiding holes 220a and 220b, respectively. On the other hand, the connection component 400 is fixed to the front end surface 210a of the optical connector 100B by inserting the second ends of the guiding pins 450A and 450B of the connection component 400 into the guiding holes 220a and 220b, respectively. In this manner, the relative positions of the optical connectors 100A and 100B are fixed by the connection component 400, and thus the optical coupling device 1 is obtained.

As described above, the optical connector 100 of the present disclosure is an MT connector, and the single optical fiber holding component 310 is mounted on the ferrule 200. That is, in the optical connector 100 of the present disclosure, the plurality of optical fibers 320 can be mounted in all of the fiber holes 230 of the ferrule 200 by one optical fiber holding component 310. Although a specific structure will be described later, according to the optical connector 100 of the present disclosure, a complicated mechanism or a special insertion method is not required due to cooperation of the ferrule 200 and the optical fiber holding component 310, and a structure that enables control of the installation position and the rotation angle of the optical fiber holding component 310 with respect to the ferrule 200 is also obtained.

Next, an assembly process of the optical connector 100 in a case where an MCF is applied as an example of the optical fiber 320 will be described.

When the plurality of optical fibers 320 are inserted, rotationally aligned, and fixed one by one, one MCF is first installed in the optical fiber holding component 310. In this state, the MCF is rotated in the direction indicated by an arrow S to perform rotational alignment, and then the MCF after the rotational alignment is fixed to the optical fiber holding component 310 with an adhesive. The optical fiber assembly 300 is obtained by repeating a series of processes of the insertion, the rotational alignment, and the fixing for all of the plurality of optical fibers. Finally, the optical fiber holding component 310 of the obtained optical fiber assembly 300 is inserted into the accommodation space 240 of the ferrule 200 from the opening portion 210c, and then the optical fiber holding component 310 is fixed to the ferrule 200 at a predetermined position and orientation, thereby obtaining the optical connector 100.

On the other hand, when the plurality of optical fibers 320 are collectively inserted, rotationally aligned, and fixed, all the MCFs are installed in the optical fiber holding component 310. In this state, the MCFs are each rotated in the directions indicated by the arrows S to perform rotational alignment. Note that, as necessary, the MCF after the rotational alignment may be temporarily fixed using a jig that grips the resin covering 322. Thereafter, all the MCFs after the rotational alignment are collectively bonded and fixed to the optical fiber holding component 310, and the optical fiber assembly 300 is obtained. Finally, the optical fiber holding component 310 of the obtained optical fiber assembly 300 is inserted into the accommodation space 240 of the ferrule 200 from the opening portion 210c, and then the optical fiber holding component 310 is bonded and fixed to the ferrule 200 at a predetermined position and orientation, thereby obtaining the optical connector 100.

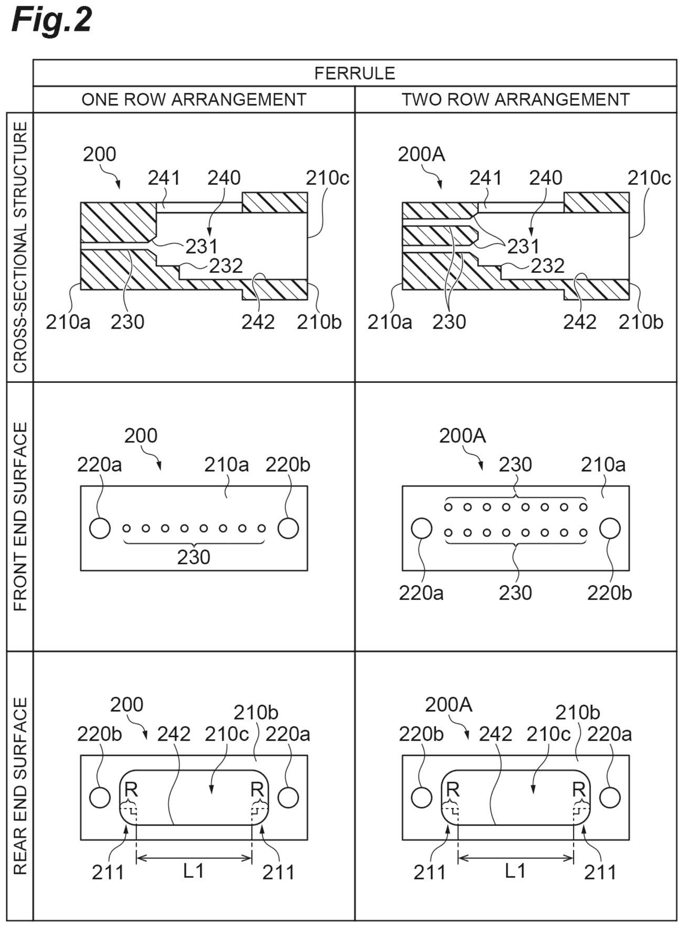

FIG. 2 is a diagram illustrating an example of the structure of a ferrule applicable to the optical connector of the present disclosure (in FIG. 2, denoted as "ferrule"). The left column of FIG. 2 (denoted as "one row arrangement" in FIG. 2) illustrates an example of the ferrule 200 in which the fiber holes 230 holding the tip portions of the optical fibers 320 are arranged in one row, and the right column of FIG. 2 (denoted as "two row arrangement" in FIG. 2) illustrates an example of a ferrule 200A in which the fiber holes 230 holding the tip portions of the optical fibers 320 are arranged in two rows. The upper part of FIG. 2 (indicated as "cross-sectional structure" in FIG. 2) illustrates the cross-sectional structure of each of the ferrule 200 and the ferrule 200A along the line I-I illustrated in FIG. 1. In the middle part of FIG. 2 (denoted as "front end surface" in FIG. 2), the front end surface 210a of each of the ferrule 200 and the ferrule 200A is illustrated. In the lower part of FIG. 2 (denoted as "rear end surface" in FIG. 2), the rear end surface 210b of each of the ferrule 200 and the ferrule 200A is illustrated.

The ferrule 200 of "one row arrangement" illustrated in the upper left column of FIG. 2 includes the front end surface 210a provided with the plurality of fiber holes 230, the rear end surface 210b provided with the opening portion 210c, and the accommodation space 240 provided between the front end surface 210a and the rear end surface 210b. The plurality of fiber holes 230 extend along a first direction from the front end surface 210a toward the rear end surface 210b, and are arranged in a row along a second direction orthogonal to the first direction, as illustrated in the middle left column of FIG. 2. A tapered portion 231 for smoothly guiding the tip portion of the plurality of optical fibers 320 to the fiber hole 230 and a stopper 232 for positioning the optical fiber holding component 310 in the first direction are provided between each fiber hole 230 and the accommodation space 240. The accommodation space 240 is connected to the outside of the ferrule 200 through the opening portion 210c provided in the rear end surface 210b and the injection hole 241 for injecting an adhesive resin. The accommodation space 240 has a cross-sectional shape substantially coinciding with the shape of the opening portion 210c, and a ferrule flat surface 242 that is a portion of an inner wall defining the accommodation space 240 is provided between the stopper 232 and the opening portion 210c. The curvature of the ferrule flat surface 242 is 0.1 (1/mm) or less, and the ferrule flat surface 242 functions as an installation reference surface of the optical fiber holding component 310.

The ferrule 200A of "two row arrangement" illustrated in the upper right column of FIG. 2 has the same structure as the ferrule 200 described above except for the arrangement of the plurality of fiber holes 230. That is, in the ferrule 200A, as illustrated in the middle right column of FIG. 2, two rows of the optical fibers 320 arranged along the second direction are prepared along the third direction orthogonal to both the first direction and the second direction. Note that each row defines a row formation group that includes one or more fiber holes 230.

Also, as illustrated in the lower left and lower right columns of FIG. 2, both the rear end surface 210b of the ferrule 200 of "one row arrangement" and the rear end surface 210b of the ferrule 200A of "two row arrangement" have the same structure. That is, the rear end surface 210b is provided with the opening portion 210c defined by an opening end where each of recessed corners 211 is chamfered. As illustrated in FIG. 2, as the "chamfering" process for each of the recessed corners 211, R chamfering is suitable in view of the ease of processing in consideration of the structure of the peripheral portion defining the opening portion 210c. In the following description and the associated drawings, an example is shown in which the recessed corner 211 of the opening end defining the opening portion 210c is R-chamfered. In addition, the ferrule flat surface 242 is arranged between a pair of adjacent recessed corners 211, and a width of the ferrule flat surface 242 along the second direction is L1. Thus, a cross-sectional shape of the accommodation space 240 orthogonal to the first direction coincides with a shape of the opening portion 210c. The curvature of the R-chamfered recessed corner 211 is 1/R (1/mm). Note that R is a curvature radius, and, specifically, a curvature radius R may be 0.05 mm to 0.5 mm.

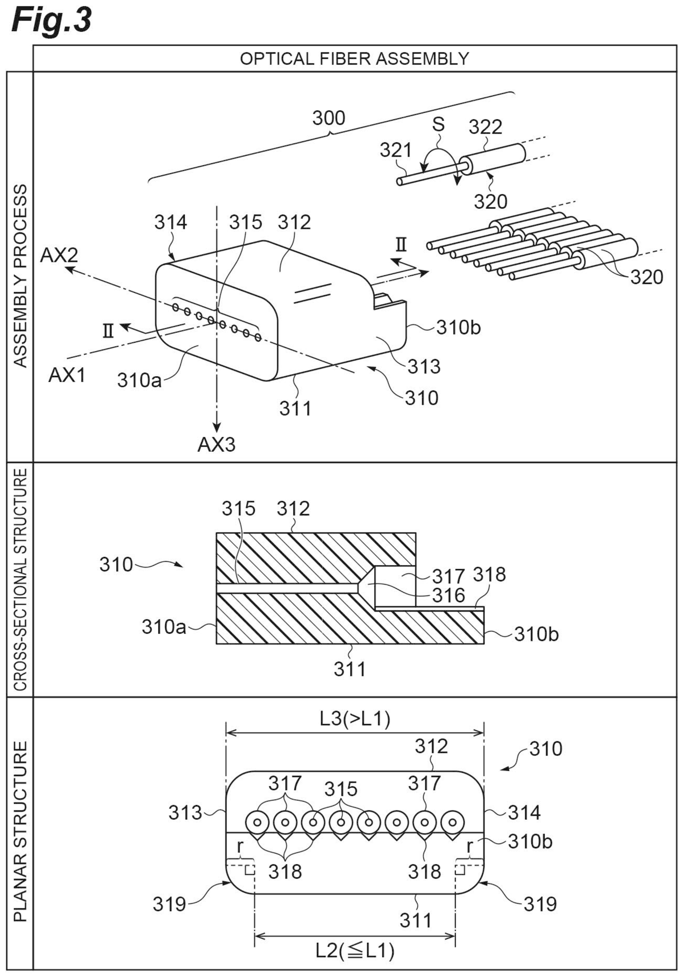

FIG. 3 is a diagram illustrating an example of the structure of the optical fiber assembly 300 of the present disclosure including the optical fiber holding component 310 of the present disclosure (denoted as "optical fiber assembly" in FIG. 3). The upper part of FIG. 3 (denoted as "assembly process" in FIG. 3) illustrates a diagram for explaining the assembly process of the optical fiber assembly 300. The middle part of FIG. 3 (denoted as "cross-sectional structure" in FIG. 3) illustrates a cross-sectional structure of the optical fiber holding component 310 that is a portion of the optical fiber assembly 300, taken along the line II-II illustrated in the upper part of FIG. 3. The lower part of FIG. 3 (denoted as "planar structure" in FIG. 3) illustrates a planar structure of the optical fiber holding component 310 when the second end surface 310b is viewed.

As a structure of the optical fiber holding component 310, for example, the optical fiber holding component 310 may be provided with a through hole for griping the glass optical fiber 321 from which the resin covering 322 is removed among the plurality of optical fibers 320. The optical fiber holding component 310 is provided with a flat surface, and a positioning structure is adopted that enables smooth mounting of the optical fiber 320 by bringing the flat surface and the ferrule flat surface 242 into contact with each other. The projected corner of the optical fiber holding component 310 adjacent to the ferrule 200 is chamfered so as to enable accurate surface alignment. The optical fiber holding component 310 is provided with one or more rows of through holes, and the number of these through holes is the same as the number of the fiber holes 230 of the ferrule 200.

Specifically, as illustrated in the upper part of FIG. 3, the optical fiber holding component 310 is a portion of the optical fiber assembly 300, and is a component fixed to the ferrule 200 in a state of holding the plurality of optical fibers 320. A portion of the optical fiber 320 is inserted into the accommodation space 240 from the opening portion 210c of the ferrule 200 in a state of holding the plurality of optical fibers 320. Note that an axis AX1 illustrated in the upper part of FIG. 3 is an axis indicating the first direction, an axis AX2 is an axis indicating the second direction, and an axis AX3 is an axis indicating the third direction.

As illustrated in the upper, middle, and lower parts of FIG. 3, the optical fiber holding component 310 includes the first end surface 310a, the second end surface 310b, a plurality of through holes 315, a flat surface 311, and a pair of projected corners 319. The first end surface 310a and the second end surface 310b are arranged along the axis AX1 indicating the first direction. The plurality of through holes 315 have a shape extending from the first end surface 310a along the axis AX1, are arranged along the axis AX2 perpendicular to the axis AX1, and allow corresponding optical fibers among the plurality of optical fibers 320 to penetrate from the second end surface 310b toward the first end surface 310a. The flat surface 311 directly faces the ferrule flat surface 242 that is an installation reference surface that is a portion of an inner wall surface defining the accommodation space 240 of the ferrule 200. The pair of projected corners 319 are arranged along the axis AX2 so as to sandwich the flat surface 311. Further, a tapered portion 316 is provided between the through hole 315 and the second end surface 310b to facilitate the insertion of each optical fiber 320, and an introduction portion 317 and a groove portion 318 into which the section covered with the resin covering 322 is inserted are provided so as to stabilize the orientation of each optical fiber 320. Although the groove portion 318 illustrated in the figure is a V-groove, a U-groove having a radius of curvature larger than the inner diameter of the through hole 315 may be applied instead of the V-groove. In the manufacture of the optical fiber assembly 300, the optical fiber 320 may be fixed to the optical fiber holding component 310 by using, for example, an adhesive such as an ultraviolet curable adhesive, a thermosetting adhesive, or an anaerobic adhesive, or laser welding. The optical fiber holding component 310 is preferably made of glass, plastic, or the like that transmits ultraviolet light having wavelengths in the range of 200 nm to 400 nm or visible radiation having wavelengths in the range of 400 nm to 800 nm.

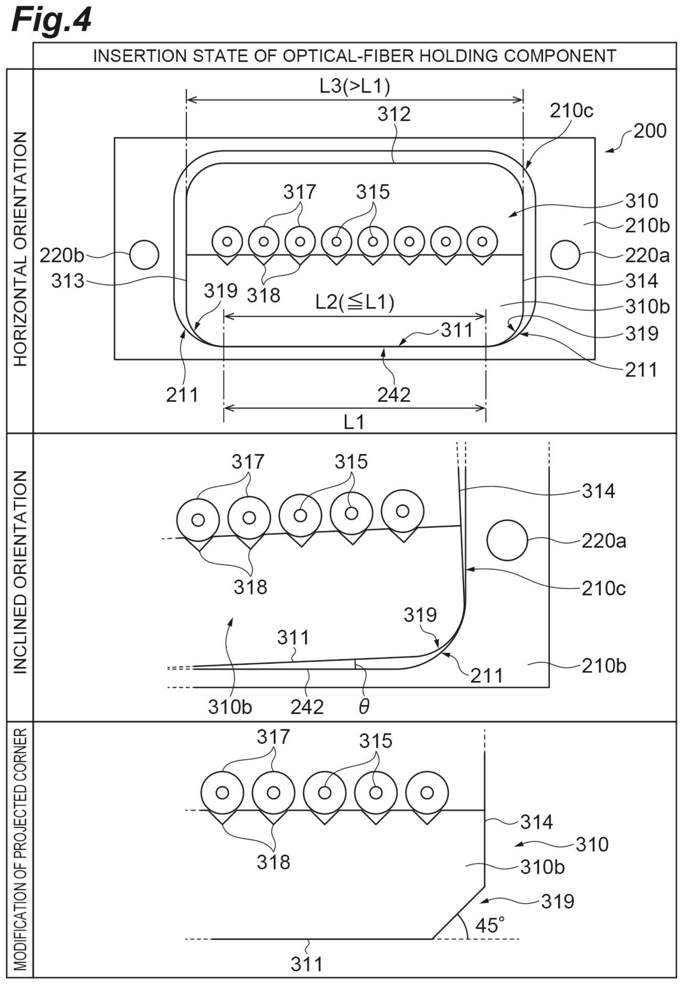

Each of the pair of projected corners 319 is chamfered so that a non-contact state is maintained with respect to the pair of recessed corners 211 which are R-chamfered in a state in which the ferrule flat surface 242 and the flat surface 311 are in contact with each other. As an example, the pair of projected corners 319 illustrated in the lower part of FIG. 3 are R-chamfered so that the curvature becomes 1/r (1/mm). Note that r is a radius of curvature, and satisfies the relationship of r < R. In addition, since the pair of projected corners 319 may maintain a non-contact state with respect to the pair of recessed corners 211 which are R-chamfered in a state in which the ferrule flat surface 242 and the flat surface 311 are in contact with each other, for example, as illustrated in the lower part of FIG. 4, the pair of projected corners may be C-chamfered.

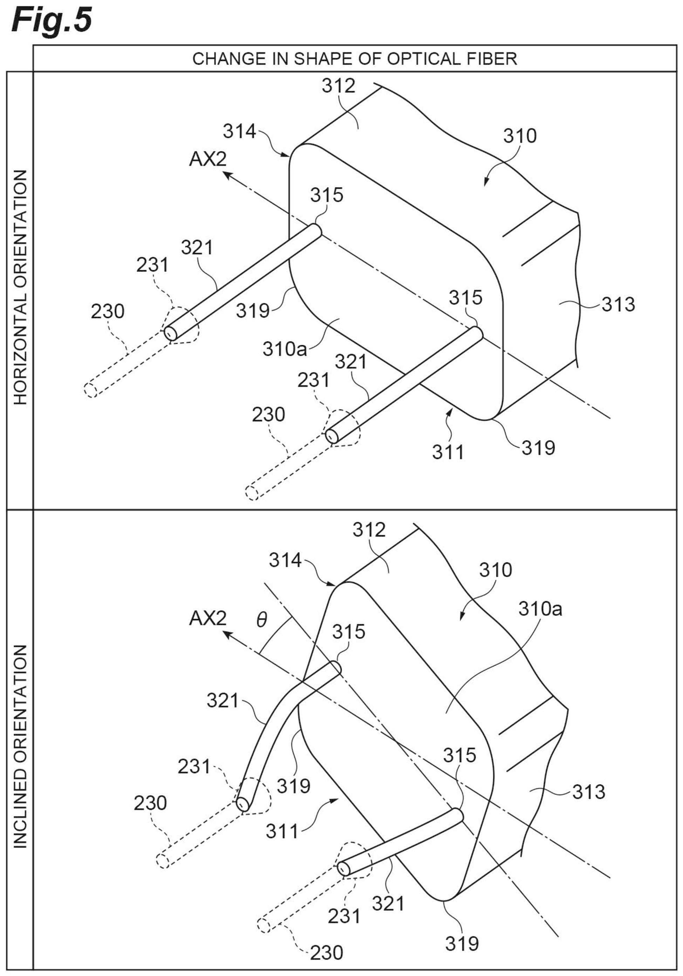

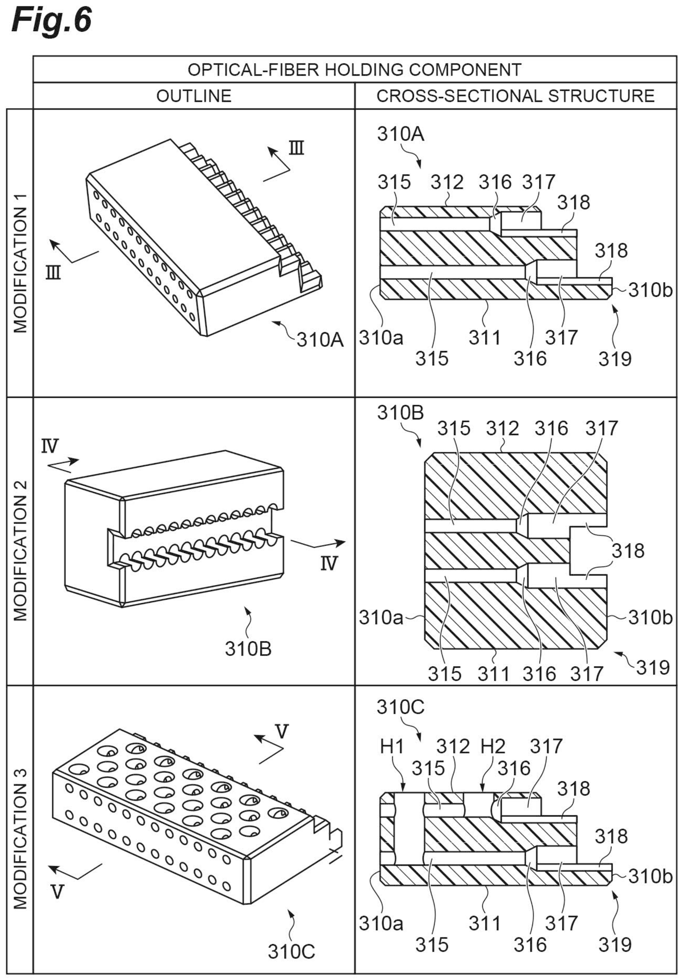

Further, the width of the optical fiber holding component 310 along the axis AX2 satisfies a relationship in which a width L2 of the flat surface 311 is provided to be equal to or less than a width L1 of the ferrule flat surface 242 and a maximum width L3 of the optical fiber holding component 310 is longer than the width L1 of the ferrule flat surface 242 with respect to the width of the ferrule 200 along the axis AX2. Thus, when the optical fiber holding component 310 is inserted into the accommodation space 240 of the ferrule 200, even when the ferrule flat surface 242 and the flat surface 311 are in an insertion state in which the ferrule flat surface 242 and the flat surface 311 are not in contact with each other, it is possible to minimize the risk of breakage of the tip portion of the optical fiber 320. The "insertion state in which the ferrule flat surface 242 and the flat surface 311 are not in contact with each other" means a state in which the flat surface 311 of the optical fiber holding component 310 is not in contact with the ferrule flat surface 242 inside the accommodation space 240 of the ferrule 200, that is, a state in which the optical fiber holding component 310 is inserted into the accommodation space 240 in a state of being deviated along the axis AX2, and thus a gap is generated by an angle θ between the ferrule flat surface 242 and the flat surface 311. This will be described in detail with reference to FIGS. 5 and 6.

Note that the width L2 of the flat surface 311 sandwiched between the pair of projected corners 319 may be ideally equal to the width L1 of the ferrule flat surface. The recessed corner of the opening end of the rear end surface 210b of the ferrule 200 is R-chamfered, and the projected corner 319 of the optical fiber holding component 310 is also R-chamfered. Thus, when the width L2 of the flat surface 311 is equal to the width L1 of the ferrule flat surface 242, the movement of the optical fiber holding component 310 along the axis AX2 is automatically restricted. That is, once the flat surface 311 and the ferrule flat surface 242 are in contact with each other, the orientation of the optical fiber holding component 310 before being fixed inside the ferrule 200 is stabilized.

In the example illustrated in FIG. 3, the plurality of through holes 315 are arranged in a row along the axis AX2 on the first end surface 310a. However, as illustrated in FIG. 6 to be described later, the plurality of through holes 315 may be arranged in two or more rows extending along the axis AX2 and arranged along the axis AX3. As described above, the plurality of through holes 315 are two dimensionally arranged on the first end surface 310a, so that the optical fiber holding component 310 can hold more optical fibers 320. When the plurality of optical fibers 320 are arranged along the axis AX3 as well as the axis AX2, the number of optical fibers 320 held by the optical fiber holding component 310 may be increased significantly, and as a result, the workability of mounting the ferrule on the plurality of optical fibers 320 may be improved significantly.

In the example illustrated in FIG. 3, the flat surface 311 of the optical fiber holding component 310 is illustrated as the surface that directly faces the ferrule flat surface 242. However, the installation reference surface in the ferrule 200 may be an inner wall surface other than the ferrule flat surface 242. In this case, the flat surface of the optical fiber holding component 310 may be a surface parallel to both the axis AX1 and the axis AX2, such as the flat surface 311 or a flat surface 312. The flat surface of the optical fiber holding component 310 may be a surface parallel to both the axis AX1 and the axis AX3, such as a flat surface 313 or a flat surface 314. When the flat surface 311 or the flat surface 312 parallel to both the axis AX1 and the axis AX2 is adopted as the flat surface of the optical fiber holding component 310, a large surface parallel to the plurality of optical fibers 320 can be used due to the structure of the optical fiber holding component 310 and the ferrule 200. Thus, the orientation of the optical fiber holding component 310 inside the ferrule 200 can be further stabilized. On the other hand, when the flat surface 313 or the flat surface 314 parallel to both the axis AX1 and the axis AX3 is adopted as the flat surface of the optical fiber holding component 310, the positioning of the optical fiber holding component 310 along the axis AX2 indicating the arrangement direction of the fiber holes 230 of the ferrule 200 is facilitated in addition to the orientation stability of the optical fiber holding component 310 inside the ferrule 200.

By providing the optical fiber holding component 310 with the flat surface 311 and the flat surface 312 parallel to each other, the handling of the optical fiber holding component 310 is facilitated, and as a result, the workability of mounting the ferrule on the plurality of optical fibers 320 can be improved. The flat surface 313 and the flat surface 314 of the optical fiber holding component 310 are surfaces formed continuously from one of the pair of projected corners 319 to the flat surface 311. In this case, the flat surface 311 and the flat surface 313, or the flat surface 311 and the flat surface 314 may be orthogonal to each other. By making the flat surface 313 and the flat surface 314 orthogonal to the flat surface 311, the optical fiber holding component 310 can be positioned along both the axis AX2, which is the arrangement direction of the fiber holes 230 of the ferrule 200, and the axis AX3 orthogonal thereto. As a result, it is easy to mount the ferrule on the plurality of optical fibers 320.

Further, the first end surface 310a of the first end surface 310a and the second end surface 310b may have a quadrangular shape or an oval shape. When the entire optical fiber holding component 310 is inserted into the accommodation space 240 of the ferrule 200, both the first end surface 310a and the second end surface 310b are located inside the accommodation space 240. Meanwhile, when a portion of the optical fiber holding component 310 is inserted into the inside of the accommodation space 240 of the ferrule 200, only the first end surface 310a is located inside the accommodation space 240. In either case, handling of the optical fiber holding component 310 is facilitated, and high accuracy positioning of the optical fiber holding component 310 inside the ferrule 200 is enabled.

FIG. 4 is a diagram for explaining an insertion state of the optical fiber holding component 310 of the present disclosure (in FIG. 4, denoted as "insertion state of optical fiber holding component"). The upper part of FIG. 4 (denoted as "horizontal orientation" in FIG. 4) illustrates the orientation of the optical fiber holding component 310 inserted into the ferrule 200 in a state where the ferrule flat surface 242 and the flat surface 311 are in contact with each other. The middle part of FIG. 4 (denoted as "inclined orientation" in FIG. 4) illustrates the orientation of the optical fiber holding component 310 inserted into the ferrule 200 in a state where the flat surface 311 is inclined with respect to the ferrule flat surface 242. The lower part of FIG. 4 (denoted as "modification of projected corner" in FIG. 4) illustrates a modification of chamfering of the projected corner 319 of the optical fiber holding component 310.

When the optical fiber holding component 310 is accommodated in the accommodation space 240 of the ferrule 200 through the opening portion 210c, the flat surface 311 of the optical fiber holding component 310 and the ferrule flat surface 242 are in contact with each other. That is, as illustrated in the upper part of FIG. 4, the optical fiber holding component 310 takes a horizontal orientation. Normally, when the optical fiber holding component 310 is bonded and fixed to the ferrule 200, a clearance for injecting an adhesive is required between the ferrule 200 and the optical fiber holding component 310. Thus, the clearance causes the instability of the orientation of the optical fiber holding component 310 inside the ferrule 200 at the time of fixing. However, in the optical connector 100 of the present disclosure, since the ferrule flat surface 242 is sandwiched between the pair of recessed corners 211 that are each R-chamfered, the presence of the pair of recessed corners 211 reduces the variation of the optical fiber holding component 310 itself along the axis AX2.

In the example of FIG. 4, the width L1 of the ferrule flat surface 242 coincides with the width L2 of the flat surface 311 of the optical fiber holding component 310, and in the state where the ferrule flat surface 242 and the flat surface 311 are in contact with each other, the projected corner 319 that is R-chamfered is maintained in the non-contact state with respect to the recessed corner 211 that is R-chamfered.

On the other hand, in the case where the optical fiber holding component 310 is accommodated in the accommodation space 240 of the ferrule 200 from the opening portion 210c, when the flat surface 311 of the optical fiber holding component 310 is inclined by the angle θ (°) with respect to the ferrule flat surface 242, that is, when the optical fiber holding component 310 is deviated along the axis AX2, the optical fiber holding component 310 is in an inclined orientation as illustrated in the middle part of FIG. 4. At this time, in the optical connector 100 of the present disclosure, the projected corner 319 of the optical fiber holding component 310 is in a state of riding on the recessed corner 211 of the ferrule 200, and the movement of the optical fiber holding component 310 along the axis AX2 is restricted. In order to restrict the movement of the optical fiber holding component 310 along the axis AX2, in the optical connector 100 of the present disclosure, a clearance is maintained between the inner wall surface of the ferrule 200 and the optical fiber holding component 310 to restrict an orientation change of the optical fiber holding component 310 due to a positional shift along the axis AX2 such that an angle formed by the ferrule flat surface 242 and the flat surface 311 is 0° to 1° in a state where a portion of the optical fiber holding component 310 is in contact with the ferrule flat surface 242.

The effect of the orientation restriction as described above is obtained by setting the width L2 of the flat surface 311 to be equal to or smaller than the width L1 of the ferrule flat surface 242, setting the maximum width L3 of the second end surface 310b of the optical fiber holding component 310 to be larger than the width L1 of the ferrule flat surface 242, and maintaining the non-contact state between the projected corner 319 and the recessed corner 211 in the state in which the flat surface 311 and the ferrule flat surface 242 are in contact with each other. As described above, according to the optical connector 100 of the present disclosure, the optical fiber holding component 310 can be accurately inserted into and fixed to the ferrule 200, and the orientation change of the optical fiber holding component 310 before being fixed inside the ferrule 200 can be effectively restricted. Further, since the optical fiber holding component 310 holds the plurality of optical fibers 320, the optical fibers 320 can be collectively mounted on the ferrule 200.

In the examples illustrated in the upper and middle parts of FIG. 4, the projected corner 319 of the optical fiber holding component 310 is R-chamfered, but as illustrated in the lower part of FIG. 4, the projected corner 319 may be C-chamfered. In this case, the projected corner 319 that is C-chamfered is maintained in a non-contact state with respect to the recessed corner 211 that is R-chamfered in a state in which the ferrule flat surface 242 and the flat surface 311 are in contact with each other.

FIG. 5 is a diagram for explaining a change in the shape of the optical fiber 320 after the optical fiber assembly 300 is inserted into the ferrule 200 (in FIG. 5, denoted as "change in shape of optical fiber"). The upper part of FIG. 5 (denoted as "horizontal orientation" in FIG. 5) illustrates a change in the shape of the tip portion of the optical fiber 320 in the horizontal orientation of the optical fiber holding component 310 illustrated in the upper part of FIG. 4. The lower part of FIG. 5 (indicated as "inclined orientation" in FIG. 5) illustrates a change in shape of the tip portion of the optical fiber 320 in the inclined orientation of the optical fiber holding component 310 illustrated in the middle part of FIG. 4.

When the optical fiber holding component 310 accommodated in the accommodation space 240 of the ferrule 200 is in a horizontal orientation as illustrated in the upper part of FIG. 4, the first end surface 310a of the optical fiber holding component 310 and the tapered portion 231 connected to the fiber hole 230 of the ferrule 200 are in a state of directly facing each other as illustrated in the upper part of FIG. 5. In the horizontal orientation, the tip portion of the optical fiber located between the tapered portion 231 and the first end surface 310a, that is, the glass optical fiber 321 exposed from the first end surface 310a maintains a linear shape.

Meanwhile, even when the optical fiber holding component 310 accommodated in the accommodation space 240 of the ferrule 200 is in the inclined orientation as illustrated in the middle part of FIG. 4, the first end surface 310a of the optical fiber holding component 310 and the tapered portion 231 connected to the fiber hole 230 of the ferrule 200 are in a state of directly facing each other as illustrated in the lower part of FIG. 5. However, in the inclined orientation, the row of the through holes 315 on the first end surface 310a of the optical fiber holding component 310 is in a state of being inclined by the angle θ (°) with respect to the axis AX2. In other words, the position of the through hole 315 on the first end surface 310a is deviated from the arrangement direction of the fiber holes 230, that is, the direction along the axis AX2. In such an inclined orientation, the glass optical fiber 321 exposed from the first end surface 310a is guided to the fiber hole 230 by the function of the tapered portion 231, but unnecessary bending stresses are applied to the glass optical fiber 321 exposed between the first end surface 310a and the tapered portion 231. When the bending stress increases, that is, when the angle θ (°) increases, an increase in transmission loss or damage occurs. Thus, in the optical connector 100 of the present disclosure, a clearance is provided so that the angle formed by the flat surface 311 of the optical fiber holding component 310 and the ferrule flat surface 242 is 0° to 1°.

FIG. 6 is a diagram illustrating a structure of a modification of the optical fiber holding component 310 of the present disclosure (in FIG. 6, denoted as "optical fiber holding component"). The left column of FIG. 6 ("outline" in FIG. 6) illustrates perspective views of optical fiber holding components 310A, 310B, and 310C related to the modification, and the right column of FIG. 6 ("cross-sectional structure" in FIG. 6) illustrates cross-sectional structures of the optical fiber holding components 310A, 310B, and 310C related to the modification. In addition, a perspective view of the optical fiber holding component 310A according to a first modification and a cross-sectional structure taken along line III-III illustrated in the perspective view are illustrated in the upper part of FIG. 6 (denoted as "modification 1" in FIG. 6). The middle part of FIG. 6 (denoted as "modification 2" in FIG. 6) illustrates a perspective view of the optical fiber holding component 310B according to a second modification and a cross-sectional structure taken along line IV-IV illustrated in the perspective view. The lower part of FIG. 6 (denoted as "modification 3" in FIG. 6) illustrates a perspective view of the optical fiber holding component 310C according to a third modification and a cross-sectional structure taken along line V-V illustrated in the perspective view.

In the optical fiber holding component 310A according to the first modification illustrated in the upper part of FIG. 6, the through hole 315 is provided with the tapered portion 316 and the introduction portion 317 for holding the section of the resin covering 322 of the optical fiber 320 at a position opposite to the first end surface 310a. The optical fiber holding component 310A is provided with the groove portion 318 extending from the introduction portion 317 to the second end surface 310b. The introduction portion 317 has an inner diameter larger than an inner diameter of the through hole 315. The groove portion 318 may be a V-groove or a U-groove having a radius of curvature larger than the inner diameter of the through hole 315. In addition, the introduction portion 317 and the groove portion 318 are regions where the resin covering 322 is placed at a position lower than the through hole 315 so that unnecessary bending does not occur in the inserted optical fiber 320. The optical fiber holding component 310A has a structure in which the plurality of optical fibers 320 can be arranged in two rows. Thus, in order to facilitate the insertion of the optical fiber 320, in the optical fiber holding component 310A, the positions of the introduction portion 317, the groove portion 318 holding the resin covering 322 of the optical fiber 320, or both in the longitudinal direction are different for each row of the optical fiber 320.

In the optical fiber holding component 310B according to the second modification illustrated in the middle part of FIG. 6, the through hole 315 is also provided with the tapered portion 316 and the introduction portion 317 for holding the section of the resin covering 322 of the optical fiber 320 at a position opposite to the first end surface 310a. In the optical fiber holding component 310B, after the optical fibers 320 in one row are inserted, the optical fiber holding component 310B is reversed and the optical fibers 320 in the next row are inserted. Further, a U-groove having a radius of curvature larger than the inner diameter of the through hole 315 is applied as the groove portion 318 to the optical fiber holding component 310B. The introduction portion 317 and the groove portion 318 are regions where the resin covering 322 is placed at a position lower than the through hole 315 so that unnecessary bending does not occur in the optical fiber 320 to be inserted. The introduction portion 317 has an inner diameter larger than an inner diameter of the through hole 315. The optical fiber holding component 310B has a structure in which the plurality of optical fibers 320 can be arranged in two rows. Also, the longitudinal position of the introduction portion 317, the groove portion 318, or both, may coincide between rows of the optical fiber 320. As described above, in the optical fiber holding component 310B, the introduction portion 317, the groove portion 318 for holding the resin covering, or both have symmetry with respect to any plane in order to facilitate the insertion of the optical fiber 320.

The optical fiber holding component 310C according to the third modification illustrated in the lower part of FIG. 6 has the same structure as the optical fiber holding component 310A according to the first modification, but is different in that injection holes H1 and H2 for bonding the optical fiber 320 are provided in the through hole 315. In addition, the through hole 315 is provided with the tapered portion 316 and the introduction portion 317 for holding the section of the resin covering 322 of the optical fiber 320 at a position opposite to the first end surface 310a. The optical fiber holding component 310C is provided with the groove portion 318 extending from the introduction portion 317 to the second end surface 310b. The introduction portion 317 has an inner diameter larger than an inner diameter of the through hole 315. The groove portion 318 may be a V-groove or a U-groove having a radius of curvature larger than the inner diameter of the through hole 315. In addition, the introduction portion 317 and the groove portion 318 are regions where the resin covering 322 is placed at a position lower than the through hole 315 so that unnecessary bending does not occur in the optical fiber 320 to be inserted. Further, the optical fiber holding component 310C has a structure in which the plurality of optical fibers 320 can be arranged in two rows. Thus, in order to facilitate the insertion of the optical fiber 320, in the optical fiber holding component 310A, the positions of the introduction portion 317, the groove portion 318 holding the resin covering 322 of the optical fiber 320, or both in the longitudinal direction are different for each row of the optical fiber 320.

In any of the optical fiber holding components 310A, 310B, and 310C, the optical fiber 320 may be fixed by using, for example, an adhesive such as an ultraviolet curable adhesive, a thermosetting adhesive, or an anaerobic adhesive, or laser welding. The optical fiber holding components 310A, 310B, and 310C are preferably made of glass, resins, or the like that transmit ultraviolet light having wavelengths in the range of 200 nm to 400 nm or visible light having wavelengths in the range of 400 nm to 800 nm.

### REFERENCE SIGNS LIST

1 optical coupling device
100, 100A, 100B optical connector
200, 200A ferrule
210a front end surface
210b rear end surface
210c opening portion
211 recessed corner
220a, 220b guiding hole
230 fiber hole
231 tapered portion
232 stopper
240 accommodation space
241 injection hole
242 ferrule flat surface
300 optical fiber assembly
310, 310A, 310B, 310C optical fiber holding component
310a first end surface
310b second end surface
311, 312, 313, 314 flat surface
315 through hole
316 tapered portion
317 introduction portion
318 groove portion
319 projected corner
320 optical fiber
321 glass optical fiber
322 resin covering
400 connection component
410 through hole
450A, 450B guiding pin
AX1, AX2, AX3 axis
S arrow
L1, L2 width
L3 maximum width
H1, H2 injection hole
θ angle

## Claims

1. An optical fiber holding component configured to hold a plurality of optical fibers and to be fixed to a ferrule in a state in which at least a portion of the optical fiber holding component is inserted into an accommodation space, the ferrule having a front end surface provided with a plurality of fiber holes into each of which a tip portion of a corresponding one of the plurality of optical fibers is inserted, a rear end surface provided with an opening portion defined by an opening end in which a plurality of recessed corners are each chamfered, and the accommodation space extending from the rear end surface toward the front end surface and having a cross-sectional shape coinciding with a shape of the opening portion, the optical fiber holding component comprising:
a first end surface and a second end surface arranged along a first direction from the front end surface toward the rear end surface of the ferrule;
a plurality of through holes having a shape extending along the first direction from the first end surface, the plurality of through holes being arranged along a second direction orthogonal to the first direction and being configured such that a corresponding optical fiber among the plurality of optical fibers extends through each of the plurality of through holes from the second end surface toward the first end surface;
a first flat surface directly facing a ferrule flat surface, the ferrule flat surface being a portion of an inner wall surface defining the accommodation space of the ferrule, the ferrule flat surface being sandwiched by, among the plurality of recessed corners, a pair of recessed corners adjacent to each other; and
a pair of projected corners arranged so as to sandwich the first flat surface in the second direction and chamfered such that a state of the pair of projected corners being not in contact with the pair of recessed corners is maintained in a state in which the ferrule flat surface and the first flat surface are in contact with each other,
wherein, with respect to a width of the ferrule in the second direction, a width of the optical fiber holding component in the second direction satisfies a relationship in which a width of the first flat surface is set to be smaller than or equal to a width of the ferrule flat surface and in which a maximum width of the optical fiber holding component is longer than a width of the ferrule flat surface.

2. The optical fiber holding component according to claim 1,
wherein a width of the first flat surface sandwiched between the pair of projected corners is equal to a width of the ferrule flat surface.

3. The optical fiber holding component according to claim 1 or claim 2,
wherein the plurality of through holes arranged on the first end surface include a plurality of row formation groups each defined by one or more through holes arranged along the second direction, and the plurality of row formation groups are arranged along a third direction orthogonal to both the first direction and the second direction.

4. The optical fiber holding component according to any one of claim 1 to claim 3,
wherein the first flat surface is one of a surface parallel to both the first direction and the second direction and a surface parallel to both the first direction and a third direction orthogonal to each of the first direction and the second direction.

5. The optical fiber holding component according to any one of claim 1 to claim 4,
wherein the optical fiber holding component has a second flat surface parallel to the first flat surface.

6. The optical fiber holding component according to any one of claim 1 to claim 5,
wherein the optical fiber holding component has a third flat surface formed to be continuous from one of the pair of projected corners to the first flat surface, and the first flat surface and the third flat surface are orthogonal to each other.

7. The optical fiber holding component according to any one of claim 1 to claim 6,
wherein the first end surface has a quadrangular shape.

8. An optical fiber assembly comprising:
the optical fiber holding component according to any one of claim 1 to claim 7; and
the plurality of optical fibers each fixed to a corresponding one of the plurality of through holes of the optical fiber holding component.

9. An optical connector comprising:
the optical fiber assembly according to claim 8; and
the ferrule in which at least a portion of the optical fiber assembly is inserted into the accommodation space,
wherein an orientation of the optical fiber holding component in the accommodation space of the ferrule is maintained in a state in which a portion of the optical fiber holding component is in contact with the ferrule flat surface of the ferrule, and
wherein the tip portions of the plurality of optical fibers are each inserted into a corresponding one of the plurality of fiber holes of the ferrule in a state in which the tip portions are fixed to the plurality of through holes of the optical fiber holding component.

10. The optical connector according to claim 9,
wherein a clearance is maintained between the inner wall surface of the ferrule and the optical fiber holding component, the clearance being configured to restrict an orientation change of the optical fiber holding component, the orientation change being caused by a positional shift in the second direction, such that an angle formed by the ferrule flat surface and the first flat surface is 0° to 1° in a state in which a portion of the optical fiber holding component is in contact with the ferrule flat surface.

11. An optical coupling device comprising:
a first optical connector and a second optical connector each being the optical connector according to claim 9 or claim 10,
wherein a relative position between the first optical connector and the second optical connector is fixed in a state in which a front end surface of the first optical connector and a front end surface of the second optical connector face each other.
